# EUROPÄISCHE PATENTSCHRIFT

(11) **EP 1 161 735 B1**
(45) Veröffentlichungstag und Bekanntmachung des Hinweises auf die Patenterteilung: **06.08.2003**
(21) Anmeldenummer: 00912576.6
(22) Anmeldetag: 09.03.2000
(51) Int. Cl.: G06F 17/30

(54) **VERFAHREN ZUM ERFASSEN UND DARSTELLEN EINES SEMANTISCHEN NETZES**
METHOD FOR DETECTING AND REPRESENTING A SEMANTIC NETWORK
PROCEDE POUR DETECTER ET REPRESENTER UN RESEAU SEMANTIQUE

(30) Priorität: 09.03.1999 DE 19910374
(43) Veröffentlichungstag der Anmeldung: 12.12.2001
(73) Patentinhaber: Definiens AG, 80339 München (DE)
(72) Erfinder: SCHMIDT, Günter, D-82008 Unterhaching (DE); ALVERS, Michael, D-81539 München (DE)
(74) Vertreter: Winter, Brandl, Fürniss, Hübner, Röss, Kaiser, Polte Partnerschaft
(86) Internationale Anmeldenummer: EP0002067
(87) Internationale Veröffentlichungsnummer: WO00054176

(56) Entgegenhaltungen:
- WO-A-98/28696
- CARLSON D A ET AL: "HYPERINTELLIGENCE: THE NEXT FRONTIER" COMMUNICATIONS OF THE ASSOCIATION FOR COMPUTING MACHINERY,US,ASSOCIATION FOR COMPUTING MACHINERY. NEW YORK, Bd. 33, Nr. 3, 1. März 1990 (1990-03-01), Seiten 311-321, XP000161628 ISSN: 0001-0782
- MOTRO A ET AL: "THE DESIGN OF KIVIEW: AN OBJECT-ORIENTED BROWSER" PROCEEDINGS FROM THE INTERNATIONAL CONFERENCE ON EXPERT DATABASE SYSTEMS, 27. April 1988 (1988-04-27), XP000869640

## Beschreibung

Die vorliegende Erfindung betrifft ein Verfahren zum Erfassen und Darstellen eines semantischen Netzes gemäß dem Oberbegriff des Anspruchs 1.

Im Stand der Technik sind zum Beispiel sogenannte Pulldown-Menüs und Popup-Menüs zum Gestalten von Bedienoberflächen jeglicher Art bekannt. Derartige Menüs sind lediglich in der Lage, spezielle gerichtete Graphen bzw. Baumstrukturen darzustellen und sind daher zur Behandlung semantischer Netze unzureichend. Ebenso besteht dahingehend ein Nachteil, daß sie unflexibel in der Bedienung sind. Zum Beispiel ist bei derartigen Menüs eine Navigation in einem semantischen Netz lediglich auf einen einzigen Verknüpfungstyp bezogen möglich.

Ferner stellen derzeit im Internet verwendete Verkettungen bzw. Links einen gerichteten Graphen dar, welcher Zyklen enthalten kann. Diese Form der Vernetzung berücksichtigt allerdings nicht die Art der Verknüpfung, das heißt, den Verknüpfungstyp, zwischen zu verbindenden Internet-Seiten.

Derzeit ist kein Verfahren zum Erstellen und Bearbeiten semantischer Netze bekannt, da die Berücksichtigung von verschiedenen Verknüpfungstypen mit den vorhandenen Darstellungs- und Bearbeitungsverfahren nicht möglich ist. Die derzeit gängigen Internet-Navigatoren berücksichtigen die Vernetzung von Informationen ebenfalls nicht und sind lediglich in der Lage, Verweise in Form von Links darzustellen, ohne aber hierbei einen eventuell vorhandenen Informationsinhalt der Verbindungen berücksichtigen bzw. unterscheiden zu können.

Bei sogenannten multimedialen Präsentationen verfolgte Ansätze beschränken sich auf bestimmte Themengebiete und unterscheiden sich hinsichtlich der im Hinblick auf das Internet gemachten Bestrebungen lediglich dahingehend, daß mit ihnen präsentierte Inhalte starr strukturiert und nicht veränderbar sind. Auch bei einer derartigen Art einer Wissenspräsentation werden keine unterschiedlichen Verknüpfungstypen berücksichtigt.

Ein Verfahren gemäß dem Oberbegriff des Anspruchs 1 ist jeweils aus Carlson D. et al.: "HYPERINTELLIGENCE: THE NEXT FRONTIER", Communications of the Association for Computing Machinery, US, New York, Bd. 33, Nr. 3, 1. März 1990, Seiten 311 bis 321, XP000161628, ISSN: 0001-0782, Motro et al.: "THE DESIGN OF KIVIEW: AN OO BROWSER", Proceedings from the International Conference on Expert Expert Database Systems, 27. April 1988, XP000869640, und der WQ-A-98 28696 bekannt.

Es ist demgemäß die Aufgabe der vorliegenden Erfindung, ein Verfahren zum Erfassen und Darstellen eines semantischen Netzes zu schaffen, mittels welchem verschiedenste Operationen durchgeführt werden können, die ein Visualisieren, Verändern und Erstellen eines semantischen Netzes und/oder ein Navigieren in einem semantischen Netz enthalten.

Diese Aufgabe wird erfindungsgemäß mit den in Anspruch 1 angegebenen Maßnahmen gelöst.

Anhand des erfindungsgemäßen Verfahrens besteht demgemäß die Möglichkeit, die Operationen eines Visualisierens eines semantischen Netzes, eines Veränderns eines semantischen Netzes, eines Erstellens eines semantischen Netzes und/oder eines Navigierens in einem semantischen Netz durchzuführen. Unter dem vorstehend genannten Begriff "Verändern" ist hierbei ein Verändern eines Informationsinhalts oder das Löschen einer oder mehrerer semantischer Einheiten zu verstehen. Ebenso können neue Verknüpfungseinheiten erstellt und angewendet werden.

Ein wesentliches Merkmal der vorliegenden Erfindung besteht darin, daß es sich bei den Verknüpfungseinheiten ebenfalls um semantische Einheiten handelt, die sich von den semantischen Einheiten lediglich durch ihre Funktionalität unterscheiden. Dadurch können diese selbst in einer vernetzten Struktur, wie zum Beispiel einer Baumstruktur, angeordnet sein. Die Anzahl der mit diesen Verknüpfungseinheiten realisierten Verknüpfungstypen ist dabei frei wählbar.

Die Nachbarschaft zwischen der zentralen semantischen Einheit und anderen semantischen Einheiten kann verschiedenartig definiert sein. Zum Beispiel besteht die Möglichkeit einer unmittelbaren oder mittelbaren Nachbarschaft. Als unmittelbare Nachbarschaft ist dabei zu verstehen, daß eine benachbarte semantische Einheit in einem jeweils dargestellten Ausschnitt über lediglich eine einzige Verknüpfungseinheit direkt mit der als zentral definierten semantischen Einheit verknüpft ist. Als mittelbare Nachbarschaft ist ferner zu verstehen, daß eine semantische Einheit in einem jeweils dargestellten Ausschnitt über mehrere Verknüpfungseinheiten gleichen Typs und sich zwischen jeweiligen Verknüpfungseinheiten befindenden semantischen Einheiten indirekt mit der als zentral definierten semantischen Einheit verknüpft ist. Außerdem kann eine Nachbarschaft auf der Grundlage von in den Verknüpfungseinheiten enthaltenen oder selbst als semantische Einheiten ausgebildeten Gewichtungen oder auf der Grundlage einer Klassifikation ermittelt bzw. berechnet werden.

Mit dem erfindungsgemäßen Verfahren werden die Anforderungen nach Einfachheit, Schnelligkeit und Durchsichtigkeit der durchzuführenden Operationen erfüllt. Ferner ermöglicht das erfindungsgemäße Verfahren, Informationen eben auf diese Weise zugänglich zu machen bzw. auf eine geeignete Weise zu ordnen.

Weitere vorteilhafte Ausgestaltungen der vorliegenden Erfindung sind Gegenstand der abhängigen Ansprüche.

Die vorliegende Erfindung wird nachstehend anhand eines Ausführungsbeispiels unter Bezugnahme auf die beiliegende Zeichnung näher erläutert.

Es zeigen:
- **Fig. 1**: ein in einem Ausführungsbeispiel der vorliegenden Erfindung verwendetes semantisches Netz;
- **Fig. 2**: eine mögliche Art der Darstellung einer semantischen Einheit und der mit ihr verbindbaren Verknüpfungstypen gemäß dem ersten Ausführungsbeispiel der vorliegenden Erfindung
- **Fig. 3A und 3B**: Darstellungen von Ausschnitten eines semantischen Netzes; und
- **Fig. 4A bis 4K**: Darstellungen einer Ausgestaltung des Ausführungsbeispiels der vorliegenden Erfindung.

Bezüglich der in dieser Anmeldung verwendeten Begriffe "semantisches Netz", "semantische Einheit" und "Verknüpfungseinheit" wird auf die Anmeldung mit dem amtlichen Aktenzeichen 199 08 204.9 mit dem Titel "Fraktales Netz n-ter Ordnung zum Behandeln komplexer Strukturen", eingereicht am 25. Februar 1999, verwiesen, wobei die Begriffe "semantisches Netz" und "fraktales Netz" als gleichbedeutend anzusehen sind. Die in vorstehend genannter Anmeldung offenbarten Merkmale bezüglich des Aufbaus und der Funktionsweise des "fraktalen Netzes", der "semantischen Einheit" und der "Verknüpfungseinheit" gelten als in dieser Anmeldung durch Verweis eingeschlossen.

Vorab ist anzumerken, daß das nachstehend beschriebene Verfahren sowohl bei einem einzigen Computer als auch bei einem verteilten Netz von Computern, wie zum Beispiel einem LAN, WAN oder dem Internet, anwendbar ist, wobei im letzteren Fall des Netzes von Computern die Bestandteile eines semantischen Netzes sowohl zentral als auch dezentral vorliegen können. Das nachstehend beschriebene Verfahren kann also allgemein als computerimplementiertes Verfahren bezeichnet werden.

Nachstehend erfolgt die Beschreibung eines Ausführungsbeispiels der vorliegenden Erfindung.

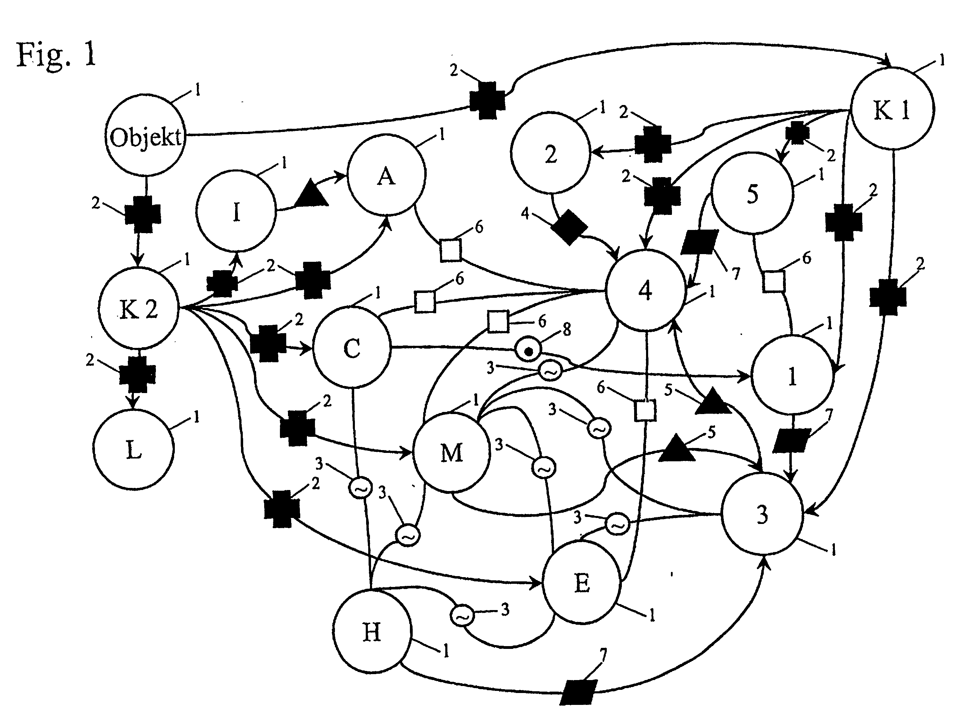

Fig. 1 zeigt ein semantisches Netz, das in dem Ausführungsbeispiel der vorliegenden Erfindung verwendet wird.

In Fig. 1 bezeichnet das Bezugszeichen 1 jeweilige semantische Einheiten. Ferner bezeichnet das Bezugszeichen 2 jeweilige semantische Verknüpfungseinheiten vom Typ "ist im speziellen/ist im allgemeinen", bezeichnet das Bezugszeichen 3 jeweilige semantische Verknüpfungseinheiten vom Typ "ist ähnlich zu", bezeichnet das Bezugszeichen 4 jeweilige semantische Verknüpfungseinheiten vom Typ "enthält/ist Teil von", bezeichnet das Bezugszeichen 5 jeweilige semantische Verknüpfungseinheiten vom Typ "hat Funktion/ist Funktion von", bezeichnet das Bezugszeichen 6 jeweilige semantische Verknüpfungseinheiten vom Typ "wechselwirkt mit", bezeichnet das Bezugszeichen 7 jeweilige semantische Verknüpfungseinheiten vom Typ "wird beschrieben durch/ist Attribut von" und bezeichnet das Bezugszeichen 8 jeweilige semantische Verknüpfungseinheiten vom Typ "folgt auf/wird gefolgt von".

Demgemäß wird zum Beispiel eine Verknüpfung zwischen der mit "Objekt" bezeichneten semantischen Einheit 1 und der mit "K1" bezeichneten semantischen Einheit 1 durch die Verknüpfungseinheit 2 vom Typ "ist im speziellen/ist im allgemeinen" beschrieben durch "Objekt ist im speziellen K1/K1 ist im allgemeinen Objekt". Ferner wird zum Beispiel eine Verknüpfung zwischen der mit "A" bezeichneten semantischen Einheit 1 und der mit "4" bezeichneten semantischen Einheit 1 durch die Verknüpfungseinheit 6 vom Typ "wechselwirkt mit" beschrieben durch "A wechselwirkt mit 4/4 wechselwirkt mit A". Das gleiche gilt unter Berücksichtigung der jeweils verwendeten der zuvor erläuterten Verknüpfungseinheiten 2 bis 8 analog für alle in Fig. 1 gezeigten semantischen Einheiten.

Deshalb ist es ersichtlich, daß die in Fig. 1 mit einem Pfeil gezeichneten Verknüpfungseinheiten 2, 4, 5, 7 und 8 direktionale Verknüpfungseinheiten sind, das heißt, Verknüpfungseinheiten, deren jeweiliger Verknüpfungstyp in einer Richtung eine Bedeutung und in einer dazu entgegengesetzten Richtung eine andere (entgegengesetzte) Bedeutung aufweist. Im Gegensatz dazu sind die in Fig. 1 ohne Pfeil gezeichneten Verknüpfungseinheiten 3 und 6 bidirektionale verknüpfungseinheiten, deren. Verknüpfungstyp in beiden Richtung die gleiche Bedeutung aufweist.

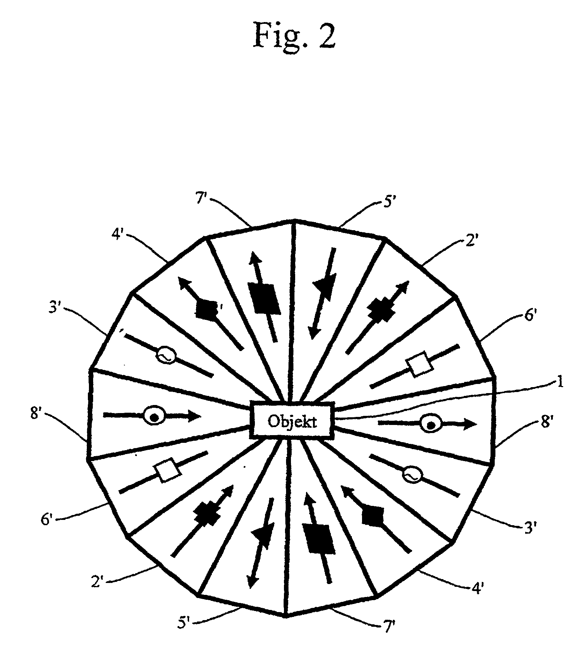

Fig. 2 zeigt eine mögliche Art der Darstellung einer semantischen Einheit und der mit ihr verbindbaren Verknüpfungstypen gemäß dem Ausführungsbeispiel der vorliegenden Erfindung.

In Fig. 2 wird die in Fig. 1 mit "Objekt" bezeichnete semantische Einheit 1 dazu verwendet, um eine mögliche graphische Darstellung zu erläutern. Genauer gesagt ist in Fig. 2 gezeigt, wie die den Verknüpfungseinheiten 2 bis 8 zugrundeliegenden Verknüpfungstypen angeordnet werden können. Dabei ist anzumerken, daß die in Fig. 2 gezeigten Verknüpfungstypen mit den gleichen Bezugszeichen wie die jeweiligen Verknüpfungseinheiten, jedoch zusätzlich mit einem Strich, bezeichnet sind.

Wie es in Fig. 2 gezeigt ist, sind die den jeweiligen Verknüpfungseinheiten 2 bis 8 zugehörigen Verknüpfungstypen 2' bis 8' derart in Segmenten eines Polygons angeordnet, daß sich die in den beiden Richtungen wirkenden Bedeutungen eines jeweiligen Verknüpfungstyps, von einem Mittelpunkt des Polygons aus betrachtet, gegenüberliegen. Im Zentrum des Polygons ist die jeweils betrachtete semantische Einheit 1 zu sehen, das heißt, in diesem Fall die mit "Objekt" bezeichnete semantische Einheit 1. Mit anderen Worten bildet in Fig. 2 die mit "Objekt" bezeichnete semantische Einheit 1 ein "Objekt im Fokus", wobei die Verknüpfungstypen 2' bis 8' in geeigneter Weise zu diesem "Objekt im Fokus" in eine geometrische Beziehung gesetzt werden.

Es ist anzumerken, daß, obgleich im weiteren Verlauf von einer einzigen semantischen Einheit als "Objekt im Fokus" ausgegangen wird, ebenso die Möglichkeit besteht, mehrere im voraus ausgewählte semantische Einheiten, die auch Verknüpfungseinheiten sein können, oder Teilnetze des semantischen Netzes zu dem "Objekt im Fokus" zu machen, also in das Zentrum zu stellen. Dies wird mittels eines Zusammenfassens von jeweiligen semantischen Einheiten und/oder Verknüpfungseinheiten durchgeführt.

Es ist ferner anzumerken, daß anstelle der in Fig. 2 für die Verknüpfungstypen 2' bis 8' verwendeten Symbole zum Beispiel eine unterschiedliche Farbgebung der jeweiligen Segmente des Polygons oder ähnliches verwendet werden kann, um die verschiedenen Verknüpfungstypen 2' bis 8' deutlich zu machen.

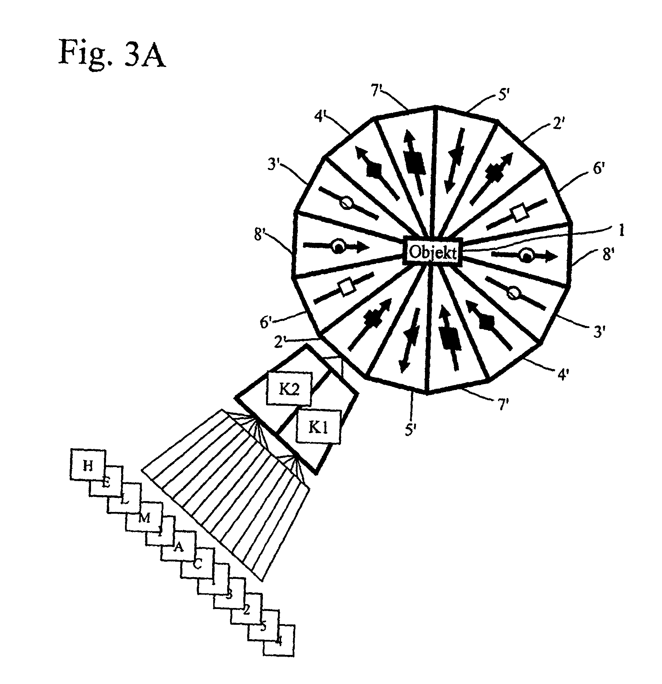

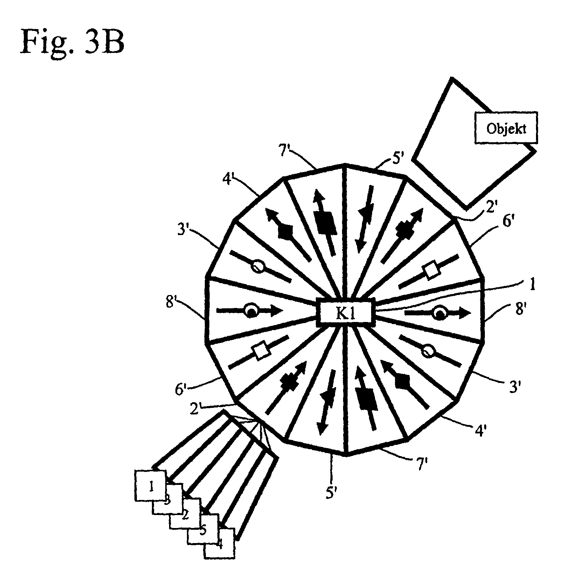

Die Figuren 3A und 3B zeigen Darstellungen von Ausschnitten eines semantischen Netzes.

In Fig. 3A ist auf die in Fig. 2 gezeigte Weise die mit "Objekt" bezeichnete semantische Einheit 1 als "Objekt im Fokus" dargestellt, wobei ferner die Nachbarschaft im semantischen Netz hinsichtlich des Verknüpfungstyps 2' "ist im speziellen" dargestellt ist, da die mit "Objekt" bezeichnete semantische Einheit 1 lediglich Verknüpfungseinheiten 2 dieses Verknüpfungstyps aufweist, wie es in Fig. 1 gezeigt ist.

Allgemein ausgedrückt wird eine semantische Einheit 1 in Beziehung zu unmittelbar und mittelbar benachbarten semantischen Einheiten 1 dargestellt. Dieses Verfahren ermöglicht das Zusammenfassen und Sortieren der im semantischen Netz vorhandenen Verknüpfungseinheiten 2 bis 8 ausgehend von der als "Objekt im Fokus" wirkenden semantischen Einheit 1.

Die hier verwendete Formulierung "um ein Objekt im Fokus" hat hierbei eine topologische Bedeutung und muß nicht notwendigerweise zu der in Fig. 3A gezeigten radialen Anordnung führen. Vielmehr ist die Sicht auf das semantische Netz als "subjektiv" von der als "Objekt im Fokus" wirkenden semantischen Einheit 1 ausgehend zu betrachten. Die als "Objekt im Fokus" wirkende semantische Einheit 1 stellt bildlich gesprochen den Standpunkt dar, von dem aus gesehen das semantische Netz betrachtet wird.

Gemäß Fig. 3A weist also die mit "Objekt" bezeichnete semantische Einheit 1 die mit "K1" und "K2" bezeichneten semantischen Einheiten 1 als seine unmittelbaren Nachbarn auf. Ferner weist die mit "Objekt" bezeichnete semantische Einheit 1 die in Fig. 1 mit Zahlen und Buchstaben bezeichneten semantischen Einheiten 1 als seine mittelbaren Nachbarn auf, da die mit "K1" und "K2" bezeichneten semantischen Einheiten 1 über Verknüpfungstypen 2' vom Typ "ist im speziellen" mit diesen verknüpft sind.

Die Nachbarschaft zwischen einer "sich im Fokus befindenden" zentralen semantischen Einheit und anderen semantischen Einheiten kann verschiedenartig definiert sein. Zum Beispiel besteht die Möglichkeit einer unmittelbaren oder mittelbaren Nachbarschaft, wie es zuvor beschrieben worden ist. Als unmittelbare Nachbarschaft ist dabei zu verstehen, daß eine benachbarte semantische Einheit in einem jeweils dargestellten Ausschnitt über lediglich eine einzige Verknüpfungseinheit direkt mit der als zentral definierten semantischen Einheit verknüpft ist. Als mittelbare Nachbarschaft ist ferner zu verstehen, daß eine semantische Einheit in einem jeweils dargestellten Ausschnitt über mehrere Verknüpfungseinheiten gleichen Typs und sich zwischen jeweiligen Verknüpfungseinheiten befindenden semantischen Einheiten indirekt mit der als zentral definierten semantischen Einheit verknüpft ist. Außerdem kann eine Nachbarschaft auf der Grundlage von in den Verknüpfungseinheiten enthaltenen oder selbst als semantische Einheiten ausgebildeten Gewichtungen oder auf der Grundlage einer Klassifikation ermittelt bzw. berechnet werden.

Zur besseren Verdeutlichung des Verfahrens des Ausführungsbeispiels der vorliegenden Erfindung wird nunmehr ein Schritt beim Navigieren in dem in Fig. 1 gezeigten semantischen Netz erläutert.

Es wird von dem in Fig. 3A gezeigten Ausschnitt des semantischen Netzes ausgegangen, also davon, daß sich die mit "Objekt" bezeichnete semantische Einheit 1 "im Fokus" befindet und demgemäß eine zentrale semantische Einheit darstellt.

Über eine geeignete Eingabevorrichtung, wie zum Beispiel eine Computer-Maus, kann nunmehr zum Beispiel durch Anklicken einer benachbarten semantischen Einheit, wie zum Beispiel der mit "K1" bezeichneten semantischen Einheit 1, zu dieser semantischen Einheit 1 navigiert werden.

Wie es in Fig. 3B gezeigt ist, wird als Ergebnis dieses Anklickens die mit "K1" bezeichnete semantische Einheit 1 zur neuen zentralen semantischen Einheit gemacht, die Verknüpfungstypen 2' "ist im speziellen" zu den mit "1", "3", "2", "5" und "4" bezeichneten semantischen Einheiten und einen Verknüpfungstyp 2' "ist im allgemeinen" zu der mit "Objekt" bezeichneten semantischen Einheit 1 aufweist.

In dem zuvor beschriebenen Schritt wird also ein erfaßter Ausschnitt des semantischen Netzes auf eine dynamische Weise geändert. Genauer gesagt wird das semantische Netz ausschnittsweise erfaßt und dargestellt, wobei der jeweils erfaßte Ausschnitt beim Wechseln von der zentralen semantischen Einheit zu einer benachbarten semantischen Einheit derart geändert wird, daß diese benachbarte semantische Einheit in analoger Weise als eine neue semantische Einheit dargestellt wird.

Es ist ferner anzumerken, daß, obgleich in den Figuren 3A und 3B lediglich die Verknüpfungstypen 2' "ist im speziellen/ist im allgemeinen" angezeigt werden, dies lediglich deshalb der Fall ist, da sowohl die mit "Objekt" bezeichnete semantische Einheit 1 als auch die mit "K1" bezeichnete semantische Einheit 1 mit derartigen Verknüpfungstypen mit anderen semantischen Einheiten 1 verbunden ist. Weist eine zentrale semantische Einheit jedoch unterschiedliche Arten von Verknüpfungstypen auf, so werden die semantischen Einheiten 1, die über diese Verknüpfungstypen mit der zentralen semantischen Einheit verknüpft sind, dem jeweiligen Verknüpfungstyp zugeordnet dargestellt. Die semantischen Einheiten 1 werden also ab-hängig vom Verknüpfungstyp gesammelt bzw. gruppiert. Aus diesen Verknüpfungsinformationen können neue Verknüpfungsstrukturen des gleichen Verknüpfungstyps generiert werden. Diese Verknüpfungsstrukturen können zum Beispiel Baumstrukturen sein, welche in geeigneter Weise mit der zentralen semantischen Einheit in geometrische Verbindung gebracht werden. Eine Möglichkeit ist die vorstehend genannte radiale Anordnung. Ein wesentlicher Vorteil liegt hierbei darin, daß semantische Einheiten 1 nach Verknüpfungstypen sortiert werden können, wobei diese entweder vorgegeben sind oder vom Verfahren automatisch ermittelt werden. Die im semantischen Netz vorgegebene komplexe Vernetzung wird dabei nicht beeinträchtigt. Da jede semantische Einheit 1 zur zentralen semantischen Einheit gemacht werden kann, kann die Sicht auf Ausschnitte des semantischen Netzes von jeder beliebigen semantischen Einheit 1 erfolgen.

Die Anzahl der darzustellenden benachbarten semantischen Einheiten 1 und von zu diesen untergeordneten semantischen Einheiten 1 kann dem Verfahren entweder vorgegeben werden oder automatisch vom Verfahren ermittelt werden. Bei der Darstellung der benachbarten semantischen Einheiten 1 als Baumstruktur kann es sich hierbei um die Baumtiefe im mathematischen Sinn handeln (in Fig. 3A beträgt die Baumtiefe zum Beispiel 2, da die unmittelbar benachbarten semantischen Einheiten 1 und die zu diesen ebenfalls unmittelbar benachbarten semantischen Einheiten 1 dargestellt sind). Jedoch ist die Tiefe der Baumstruktur im allgemeinen frei wählbar und kann je nach Verwendungszweck erwünscht angepaßt werden.

Ferner kann die Tiefe der Baumstruktur ebenso pro "Ast", das heißt, pro Verknüpfungstyp, frei wählbar sein und je nach Anwendungszweck angepaßt werden, was bedeutet, daß bei einem Verknüpfungstyp eine Tiefe der Baumstruktur vorliegen kann, die sich von der Tiefe der Baumstruktur bei einem anderen Verknüpfungstyp unterscheidet.

Ebenfalls ist es möglich, Gewichtungen, welche selbst als semantische Einheiten 1 ausgebildet sein können und auf Bestandteile der semantischen Verknüpfungseinheiten angewendet werden, bei der Ermittlung der darzustellenden Baumtiefe auszunutzen. Eine Gewichtung von Null kann demgemäß dahingehend aufgefaßt werden, daß die Verknüpfung zwar vorhanden ist, aber nicht ausgeführt wird, und eine Gewichtung von Eins kann dahingehend aufgefaßt werden, daß eine vollständig ausgeprägte Verknüpfung vorhanden ist, usw.

Weiterhin kann ein Sortieren von semantischen Einheiten durchgeführt werden. Das Sortieren erfolgt auf eine derartige Weise, daß ein virtuelles Ordnungselement vorgesehen ist, welches nachfolgende Elemente, das heißt, semantische Einheiten, nach einem vorgegebenen Kriterium sortiert, wobei das vorgegebene Kriterium vorzugsweise von einem Benutzer vorgegeben wird. Es ist also ein Teilnetz zur benutzerspezifischen Änderung vorhanden, welches ein Sortieren von semantischen Einheiten zum Beispiel nach Zeit, Datum, Größe, usw. durchführt.

Ferner kann eine Reihenfolge von semantischen Einheiten mittels einer "Drag-und-Drop"-Funktionalität manuell von einem Benutzer mittels einer geeigneten Eingabevorrichtung, wie zum Beispiel einer Computermaus, verändert werden.

Aus der vorhergehenden Beschreibung wird deutlich, daß das Verfahren gemäß dem Ausführungsbeispiel der vorliegenden Erfindung eine Suchfunktionalität im semantischen Netz beinhaltet, die es zuläßt, semantische Einheiten nach einem oder mehreren Kriterien zu identifizieren.

Vorstehend sind die Operationen eines Visualisierens eines semantischen Netzes und eines Navigierens in einem semantischen Netz erläutert worden. Jedoch können auch die Operationen eines Erstellens und eines Veränderns eines semantischen Netzes mit dem Verfahren des Ausführungsbeispiels der vorliegenden Erfindung ausgeführt werden.

Unter Zuhilfenahme einer geeigneten Eingabevorrichtung, wie zum Beispiel einer Computer-Maus, besteht die Möglichkeit, semantische Einheiten und Verknüpfungseinheiten zwischen semantischen Einheiten zu erzeugen.

Ferner ist es durch die zuvor beschriebene Navigation im semantischen Netz möglich, zu jeder sich im semantischen Netz befindenden semantischen Einheit hin zu navigieren. Durch eine geeignete Eingabevorrichtung, wie zum Beispiel eine Computer-Maus, kann dann zum Beispiel der Informationsinhalt der semantischen Einheiten verändert werden oder die semantische Einheit gelöscht werden. Zugriffsrechte auf die semantische Einheit, welche wiederum in Form von semantischen Einheiten, wie zum Beispiel von speziellen Verknüpfungstypen, realisiert werden können, regeln die Eingriffs- bzw. Zugriffsmöglichkeiten in bzw. auf das semantische Netz.

Schließlich ist anzumerken, daß die semantischen Einheiten zum Beispiel ebenso Funktionen enthalten können, die unter Zuhilfenahme des vorhergehenden Verfahrens ausgeführt werden können, und/oder daß der Informationsinhalt jeder semantischen Einheit unter Zuhilfenahme des vorhergehenden Verfahrens betrachtet und/oder verändert werden kann.

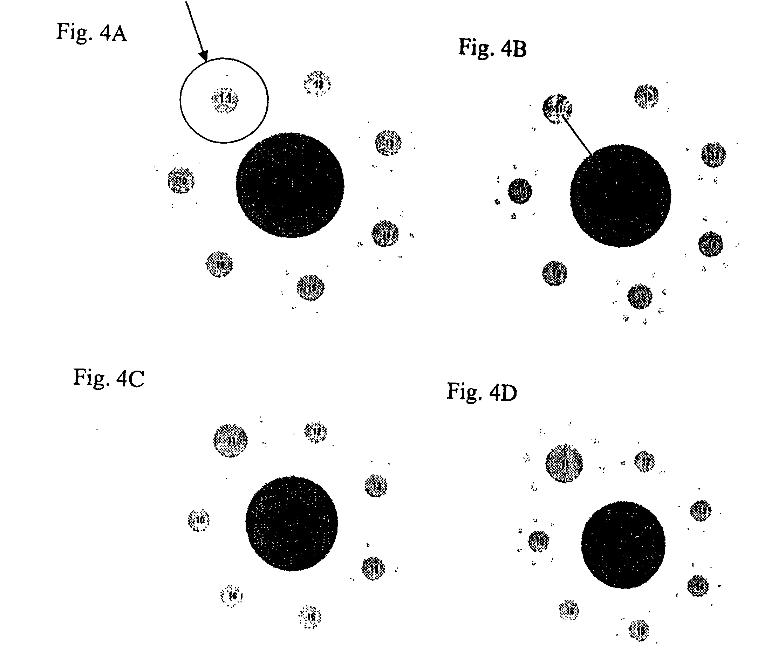

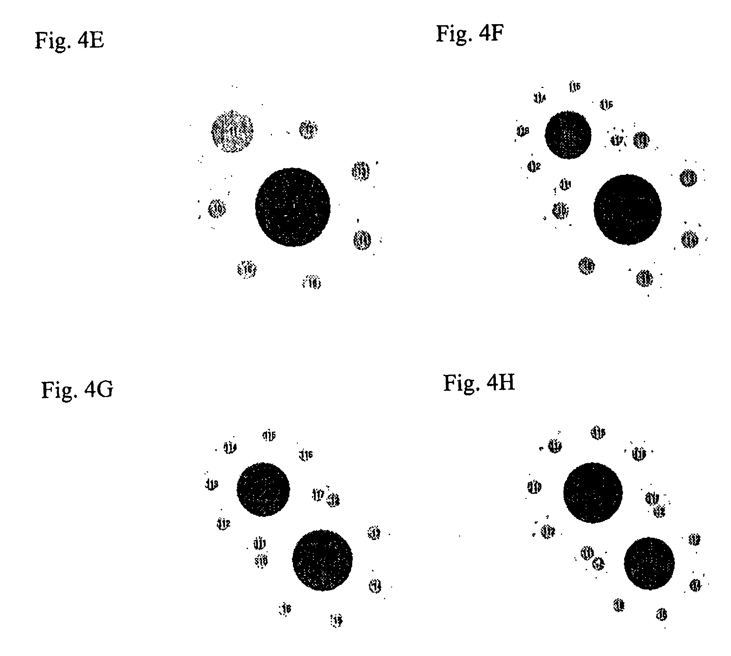

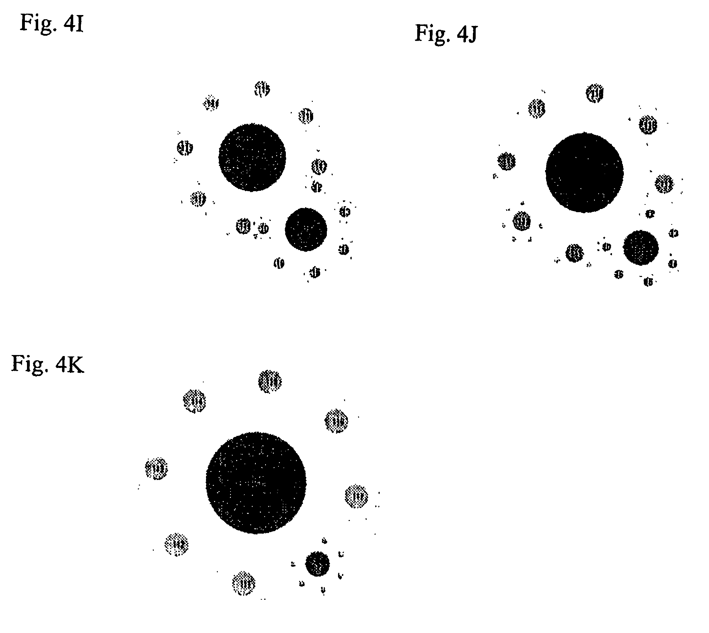

Nachstehend wird unter Bezugnahme auf die Figuren 4A bis 4K eine Ausgestaltung des Ausführungsbeispiels der vorliegenden Erfindung beschrieben.

Genauer gesagt zeigen diese Figuren eine andere mögliche Darstellungsweise eines semantischen Netzes. In Fig. 4A wird durch ein auslösendes Ereignis, wie zum Beispiel einen Mausklick, eine mit "11" bezeichnete semantische Einheit stufenweise in Richtung Zentrum der Ansicht verschoben. Wie es aus den Figuren 4B bis 4K ersichtlich ist, ist dabei ein kontinuierlicher Übergang möglich, dessen jeweilige Einzelschritte in den Figuren 4B bis 4K dargestellt sind. In Fig. 4K ist der Endzustand gezeigt, in dem die mit "11" bezeichnete semantische Einheit nunmehr die neue zentrale semantische Einheit, also die semantische Einheit "im Fokus" ist. Dabei ist die in Fig. 4A ursprünglich als zentral gezeigte mit "1" bezeichnete semantische Einheit nunmehr zu einer sich am Rand befindenden semantischen Einheit, also zu einem Randobjekt, geworden.

Ein wesentlicher Vorteil des zuvor beschriebenen Verfahrens liegt in der Schnelligkeit, mit welcher Operationen in einem semantischen Netz ausgeführt werden können. Ferner liegt ein weiterer wesentlicher Vorteil in der Klarheit, die durch das Zusammenfassen von Verknüpfungseinheiten in Bezug auf die sich im Zentrum befindende semantische Einheit erreicht wird. Die Vorgehensweise, das semantische Netz von einer sich im Zentrum befindenden semantischen Einheit aus "zu betrachten" schafft eine bislang nicht erreichte Klarheit beim Darstellen von komplexen Zusammenhängen, welche mit einem semantischen Netz dargestellt werden können.

Zum Beispiel besteht mit dem vorstehend beschriebenen Verfahren die Möglichkeit einer Vereinheitlichung von Bedienoberflächen von komplexen Systemen, wie zum Beispiel Computerprogrammen, Betriebssystemen von Computern, Maschinen, Geräten, usw. Der große Vorteil besteht in der Möglichkeit einer Modellierbarkeit themenübergreifender Informationen, wie sie zum Beispiel vorhergehend beschrieben worden sind, in semantischen Netzen. Zum Beispiel ist das Erstellen eines semantischen Netzes und das Ausführen von Operationen auf diesem semantischen Netz, welches technische, ökologische, ökonomische und/oder soziale semantische Einheiten verschiedenartig miteinander verknüpft, ohne Probleme möglich.

Das erfindungsgemäße Verfahren ist überall anwendbar, wo vernetzte Strukturen auftreten, und ist weiterhin zum Beispiel bei einer Netznavigation, insbesondere im Internet oder in Intranets, einer Navigation zum Bedienen von Geräten und Maschinen, einer Computerprogramm- oder Betriebssystemsteuerung, einer Visualisierung von Datenbankinhalten, einer Ansteuerung und Visualisierung von Datenarchiven oder einer Visualisierung von Dateisystemen, anwendbar.

Bezüglich weiterer Merkmale und Vorteile der vorliegenden Erfindung wird ausdrücklich auf die Offenbarung der Zeichnung verwiesen.

## Patentansprüche

1. Verfahren zum Erfassen und Darstellen eines semantischen Netzes, das aus einer Vielzahl von semantischen Einheiten (1) besteht, wobei das semantische Netz sowohl semantische Einheiten (1), die jeweils Informationsinhalte besitzen, als auch Verknüpfungseinheiten (2 bis 8) enthält, die jeweils einen Beziehungsinhalt beschreiben, der jeweils zwei semantische Einheiten (1) derart verknüpft, daß die gegenseitige Beziehung der beiden verknüpften semantischen Einheiten (1) durch den Beziehungsinhalt bestimmt wird,
***dadurch gekennzeichnet, daß*** das Verfahren die folgenden Schritte aufweist:
derartiges Darstellen einer als zentrale semantische Einheit definierten semantischen Einheit (1) in einem jeweils erfaßten Ausschnitt des semantischen Netzes, daß die von dieser zentralen semantischen Einheit ausgehenden Verknüpfungseinheiten (2 bis 8) in einer Baumstruktur nach ihrem Verknüpfungstyp und/oder nach dem Informationsinhalt der durch die Verknüpfungseinheiten (2 bis 8) verbundenen semantischen Einheiten (1) gruppiert in einer geometrischen Beziehung zu der zentralen semantischen Einheit dargestellt werden; und
derartiges Ändern des erfaßten Ausschnitts beim Wechseln von dieser zentralen semantischen Einheit zu einer unmittelbar oder mittelbar benachbarten semantischen Einheit (1), daß diese benachbarte semantische Einheit (1) in analoger weise als eine neue zentrale semantische Einheit dargestellt wird.

2. Verfahren nach Anspruch 1, ***dadurch gekennzeichnet, daß*** semantische Verknüpfungseinheiten (2 bis 8) semantische Einheiten (1) sind und als zentrale semantische Einheit darstellbar sind.

3. Verfahren nach Anspruch 1 oder 2, ***dadurch gekennzeichnet, daß*** die Tiefe der Baumstruktur frei wählbar ist.

4. Verfahren nach einem der vorhergehenden Ansprüche, ***dadurch gekennzeichnet, daß*** durch eine Eingabevorrichtung und/oder Klassifikation festgelegt wird, welche Typen von Verknüpfungseinheiten (2 bis 8) darzustellen sind.

5. Verfahren nach einem der vorhergehenden Ansprüche, ***dadurch gekennzeichnet, daß*** die Tiefe der Baumstruktur ausgehend von der zentralen semantischen Einheit automatisch aus Gewichtungsfaktoren der jeweiligen Verknüpfungseinheiten (2 bis 8) ermittelt wird.

6. Verfahren nach Anspruch 5, ***dadurch gekennzeichnet, daß*** die Tiefe der Baumstruktur der Verknüpfungseinheiten (2 bis 8) durch geeignete Eingabevorrichtungen vorgebbar ist.

7. verfahren nach Anspruch 6, ***dadurch gekennzeichnet, daß*** die Tiefe der Baumstruktur pro Typ der Verknüpfungseinheiten (2 bis 8) unterschiedlich festlegbar ist.

8. Verfahren nach einem der vorhergehenden Ansprüche, ***dadurch gekennzeichnet, daß*** Gewichtungsfaktoren jeweiliger Verknüpfungseinheiten (2 bis 8) zwischen semantischen Einheiten (1) und/oder eine Klassifikation von durch diese Verknüpfungseinheiten (2 bis 8) verknüpften semantischen Einheiten (1) bestimmt, in welcher Form, Größe und/oder Farbe die semantischen Einheiten (1) dargestellt werden.

9. Verfahren nach einem der vorhergehenden Ansprüche, ***dadurch gekennzeichnet, daß*** das Wechseln von der zentralen semantischen Einheit zu einer unmittelbar oder mittelbar benachbarten semantischen Einheit (1), um diese zur zentralen semantischen Einheit zu machen, mittels einer Eingabevorrichtung erfolgt.

10. Verfahren nach Anspruch 9, ***dadurch gekennzeichnet, daß*** die Eingabevorrichtung eine Computermaus ist und die Aktion durch einen Klick, einen Doppelklick und/oder geometrische Berührung des Mauszeigers mit dem Objekt ausgelöst wird.

11. Verfahren nach einem der vorhergehenden Ansprüche, ***dadurch gekennzeichnet, daß*** die semantischen Einheiten (1) ausführbare Funktionen enthalten.

12. Verfahren nach einem der vorhergehenden Ansprüche, ***dadurch gekennzeichnet, daß*** der Informationsinhalt jeder semantischen Einheit (1) betrachtbar und/oder veränderbar ist.

13. Verfahren nach Anspruch 12 ***dadurch gekennzeichnet, daß*** der Informationsinhalt Texte, Bilder, Klänge, Filme, Filmsequenzen, Internetseiten und/oder Elemente eines Computersystems aufweist.

14. Verfahren nach einem der vorhergehenden Ansprüche, ***dadurch gekennzeichnet, daß*** mehrere im voraus ausgewählte semantische Einheiten (1) oder Teilnetze des semantischen Netzes mittels eines Zusammenfassens von semantischen Einheiten (1) als zentrale semantische Einheit 'definierbar sind.

## Claims

1. Method of detecting and displaying a semantic network consisting of a plurality of semantic units (1), the semantic network containing both semantic units (1) each having data contents, and linking units (2 to 8) each describing relational contents respectively linking two semantic units (1) in such a way that the mutual relationship of the two linked semantic units (1) is determined by the relational contents,
***characterised in that*** the method comprises the following steps:
displaying a semantic unit (1) defined as a central semantic unit in a respective detected segment of the semantic network so that the linking units (2 to 8) emanating from this central semantic unit are displayed in a geometric relationship with respect to the central semantic unit and are grouped in a tree structure depending on their link type and/or depending on the information content of the semantic units (1) linked by the linking units (2 to 8); and
on switching from this central semantic unit to a directly or indirectly adjacent semantic unit (1), modifying the segment so that this adjacent semantic unit (1) is displayed as a new central semantic unit.

2. Method as claimed in claim 1, ***characterised in that*** semantic linking units (2 to 8) are semantic units (1) and can be displayed as a central semantic unit.

3. Method as claimed in claim 1 or 2, ***characterised in that*** the depth of the tree structure is freely selectable.

4. Method as claimed in one of the preceding claims, ***characterised in that*** an input device and/or classification is used as a means of setting which types of linking units (2 to 8) are to be displayed.

5. Method as claimed in one of the preceding claims, ***characterised in that*** the depth of the tree structure from the central semantic unit is automatically determined on the basis of weighting factors of the respective linking units (2 to 8).

6. Method as claimed in claim 5, ***characterised in that*** the depth of the tree structure of linking units (2 to 8) can be pre-set using appropriate input devices.

7. Method as claimed in claim 6, ***characterised in that*** the depth of the tree structure may be different, and can be fixed by type of linking units (2 to 8).

8. Method as claimed in one of the preceding claims, ***characterised in that*** weighting factors of respective linking units (2 to 8) between semantic units (1) and/or a classification of semantic units (1) linked by these linking units (2 to 8) determine(s) in what format, size and/or colour the semantic units (1) are displayed.

9. Method as claimed in one of the preceding claims, ***characterised in that*** the switch from the central unit to a directly or indirectly adjacent semantic unit (1) is made by making the latter the central semantic unit by means of an input device.

10. Method as claimed in claim 9, ***characterised in that*** the input device is a computer mouse and the action is triggered by clicking, double-clicking and/or geometrically pointing the mouse cursor on the object.

11. Method as claimed in one of the preceding claims, ***characterised in that*** the semantic units (1) contain executable functions.

12. Method as claimed in one of the preceding claims, ***characterised in that*** the information content of every semantic unit (1) can be viewed and/or edited.

13. Method as claimed in claim 12, ***characterised in that*** the information content includes texts, images, sounds, films, film sequences, Internet pages and/or elements of a computer system.

14. Method as claimed in one of the preceding claims, ***characterised in that*** several previously selected semantic units (1) or part-networks of the semantic network can be defined as a central semantic unit on the basis of a compilation of semantic units (1).

## Revendications

1. Procédé pour détecter et représenter un réseau sémantique, qui est constitué par une multiplicité d'unités sémantiques (1), le réseau sémantique contenant aussi bien des unités sémantiques (1), qui contiennent chacune des contenus en informations, que des unités combinatoires (2 à 8) qui écrivent chacune un contenu relationnel, qui combine respectivement deux unités sémantiques (1) de telle sorte que la relation réciproque des deux unités sémantiques combinées (1) est déterminée par le contenu relationnel,
**caractérisé en ce que** le procédé comprend les étapes suivantes:
représentation d'une unité sémantique (1) définie en tant qu'unité sémantique centrale, dans une section respectivement détectée du réseau sémantique de telle sorte que les unités combinatoires (2 à 8) partant de cette unité sémantique centrale sont représentées dans une structure arborescente en fonction de leur type de combinaison et/ou en fonction du contenu en informations des unités sémantiques (1) reliées par les unités combinatoires (2 à 8), d'une manière groupée dans une relation géométrique par rapport à l'unité sémantique centrale; et
modification de la section détectée lors du passage de cette unité sémantique centrale à une unité sémantique (1) directement ou indirectement voisine, de telle sorte que cette unité sémantique voisine (1) est représentée de façon analogue sous la forme d'une nouvelle unité sémantique centrale.

2. Procédé selon la revendication 1, **caractérisé en ce que** des unités combinatoires sémantiques (2 à 8) sont des unités sémantiques (8) et peuvent être représentées sous la forme d'une unité sémantique centrale.

3. Procédé selon la revendication 1 ou 2, **caractérisé en ce que** la profondeur de la structure arborescente peut être choisie librement.

4. Procédé selon l'une des revendications précédentes, **caractérisé en ce que** la détermination des types d'unités combinatoires (2 à 8), qui doivent être représentées, est effectuée au moyen d'un dispositif d'entrée et/ou d'une classification.

5. Procédé selon l'une des revendications précédentes, **caractérisé en ce que** la profondeur de la structure arborescente est déterminée automatiquement à partir de l'unité sémantique centrale sur la base de facteurs de pondération des unités combinatoires respectives (2 à 8).

6. Procédé selon la revendication 5, **caractérisé en ce que** la profondeur de la structure arborescente des unités combinatoires (2 à 8) peut être prédéterminée par des dispositifs d'entrée appropriés.

7. Procédé selon la revendication 6, **caractérisé en ce que** la profondeur de la structure arborescente peut être fixée différemment pour chaque type des unités combinatoires (2 à 8).

8. Procédé selon l'une des revendications précédentes, **caractérisé en ce que** les facteurs de pondération d'unités combinatoires respectives (2 à 8) entre des unités sémantiques (1) et/ou une classification d'unités sémantiques (1) combinées au moyen de ces unités combinatoires (2 à 8) déterminent, sous quelle forme, avec quelle grandeur et/ou avec quelle couleur les unités sémantiques (1) sont représentées.

9. Procédé selon l'une des revendications précédentes, **caractérisé en ce que** le passage de l'unité sémantique centrale à une unité sémantique (1) indirectement ou directement voisine cette unité deviennent l'unité sémantique centrale, s'effectue à l'aide d'un dispositif d'entrée.

10. Procédé selon la revendication 9, **caractérisé en ce que** le dispositif d'entrée est une souris d'ordinateur et que l'action est déclenchée au moyen d'un cliquage, d'un double cliquage et/ou d'un contact géométrique du pointeur de la souris avec l'objet.

11. Procédé selon l'une des revendications précédentes, **caractérisé en ce que** les unités sémantiques (1) contiennent des fonctions pouvant être exécutées.

12. Procédé selon rune des revendications précédentes, **caractérisé en ce que** les contenus en informations de chaque unité sémantiques (1) peuvent être observés et/ou modifiés.

13. Procédé selon la revendication 12, **caractérisé en ce que** le contenu en informations comporte des textes, des images, des sons, des films, des séquences de films, des pages Internet ou des éléments d'un système d'ordinateur.

14. Procédé selon l'une des revendications précédentes, **caractérisé en ce que** plusieurs unités sémantiques (1) sélectionnées ou plusieurs parties du réseau sémantique sélectionnées par avance peuvent être définies à l'aide d'une réunion d'unités sémantiques (1) en tant qu'unité sémantique centrale.
